# EUROPÄISCHE PATENTSCHRIFT

(11) **EP 0 738 240 B1**
(45) Veröffentlichungstag und Bekanntmachung des Hinweises auf die Patenterteilung: **01.10.1997**
(21) Anmeldenummer: 95904384.5
(22) Anmeldetag: 22.12.1994
(51) Int. Cl.: C03B 23/09

(54) **VORRICHTUNG ZUM VERFORMEN VON GLASROHREN**
GLASS TUBE SHAPING DEVICE
DISPOSITIF DE FORMAGE DE TUYAUX EN VERRE

(30) Priorität: 23.12.1993 DE 4344936
(43) Veröffentlichungstag der Anmeldung: 23.10.1996
(73) Patentinhaber: Dichter, Hans-Joachim, D-10829 Berlin (DE)
(72) Erfinder: DIECKOW, Bernhard, D-12307 Berlin (DE)
(74) Vertreter: Böning, Manfred, Dr.-Ing.
(86) Internationale Anmeldenummer: DE9401540
(87) Internationale Veröffentlichungsnummer: WO9517352

(56) Entgegenhaltungen:
- DE-C- 3 613 212

## Beschreibung

Die Erfindung betrifft eine Vorrichtung zum Verformen von Glasrohren mit mindestens einem in eine Drehbewegung versetzbaren Formwerkzeug, das gegen den Umfang des erweichten Glasrohres drückbar ist, um eine seinem Profil entsprechende Einschnürung des Glasrohres zu erzeugen.

Vorrichtungen der vorstehenden Art werden in Glasbearbeitungsmaschinen zur Herstellung von Fläschchen aus Glasrohren verwendet, um die Hälse der Fläschchen zu formen. Bei einer aus der DE-B2-17 96 100 bekannten einschlägigen Vorrichtung werden die von einem Formrollenpaar gebildeten Formwerkzeuge von Auslegerarmen gehalten, die in entgegengesetzter Richtung hin- und herschwenkbar sind und die beim Formgebungsprozeß dergestalt auf die Längsachse des Glasrohres zu bewegt werden, daß dies zangenartig von den Formrollen erfaßt wird. Sobald es zu einem Kontakt zwischen dem Glasrohr und den Formrollen kommt, werden diese durch das in einem rotierenden Spannfutter gehaltene Glasrohr mitgenommen und in eine Drehbewegung versetzt, wobei die Enddrehzahl der Formrollen durch die Drehzahl des Glasrohrs bestimmt wird, der bekanntlich zur Vermeidung eines sogenannten Peitscheneffektes enge Grenzen gesetzt sind. Aufgrund der geschilderten Gegebenheiten muß bei der Formgebung des Glasrohres mit vergleichsweise großen Vor schüben pro Umdrehung des Glasrohres gearbeitet werden, denn eine Verlängerung der Bearbeitungszeiten kommt nicht nur aus wirtschaftlichen Gründen, sondern auch deshalb nicht in Betracht, weil die Abkühlungskurve des Glases ihr entgegensteht. Die relativ großen Vorschübe pro Umdrehung sind mit dem Nachteil verbunden, daß auf den erweichten Teil des Glasrohres Normal- und Tangentialkräfte ausgeübt werden, die zu unerwünschten Verformungen, d.h. zur Fertigung von Ausschuß führen können.

Der Erfindung liegt die Aufgabe zugrunde, eine Vorrichtung der in Betracht gezogenen Gattung zu schaffen, mit der es unter Einhaltung einer durch den Erweichungszustand des Glases vorgegebenen Bearbeitungszeit möglich ist, ein Glasrohr mit geringen Vorschüben der Formwerkzeuge pro Rohrumdrehung schonend und mit großer Genauigkeit zu verformen. Diese Aufgabe wird erfindungsgemäß dadurch gelöst, daß die Vorrichtung einen während des Formgebungsprozesses um die Längsachse des Glasrohrs rotierenden Drehteller aufweist, auf dem drehbar und senkrecht zur Längsachse des Glasrohrs verschiebbar das Formwerkzeug gelagert ist.

Die erfindungsgemäße Vorrichtung erlaubt es, die Strecke, über die der Verformungsvorgang bei vorgegebener Verformungsdauer erfolgt, gegenüber bekannten Konstruktionen deutlich zu erhöhen, indem man die Drehzahl des Drehtellers in Abhängigkeit von den Abmessungen des Glasrohres gegenüber der Drehzahl des Glasrohres in der Praxis um das 5 bis 10fache erhöht. Möglich ist es darüber hinaus sogar, die Bearbeitung an einem ruhenden Glasrohr vorzunehmen.

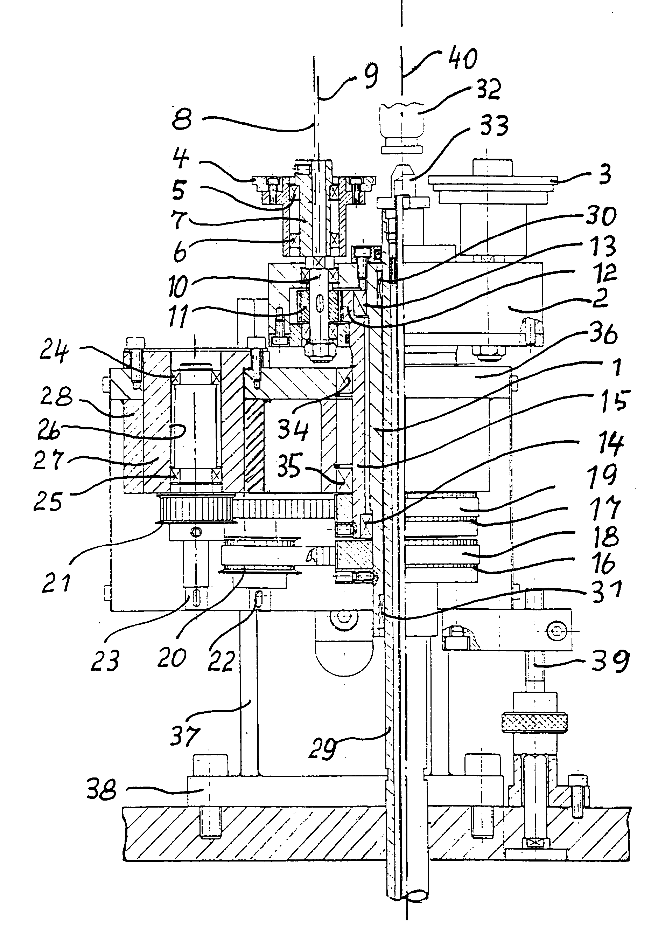

Weitere Einzelheiten und Merkmale der Erfindung ergeben sich aus den Unteransprüchen, der beigefügten Zeichnung sowie deren nachstehender Beschreibung.

Die Zeichnung zeigt eine besonders vorteilhafte Ausführungsform der Erfindung.

Die in der Zeichnung dargestellte besonders vorteilhafte Vorrichtung weist einen am oberen Ende einer als Hohlwelle ausgebildeten Antriebswelle 1 angeordneten Drehteller 2 auf, der zwei sich diametral gegenüberliegende, als kugelgelagerte Profilrollen ausgebildete Formwerkzeuge 3 und 4 trägt. Die Kugellager 5 und 6 für die Formwerkzeuge 3,4 sind auf einem zylindrischen Zapfen 7 gelagert, dessen Längsachse 8 gegenüber der Längsachse 9 einer Welle 10 um einen Betrag versetzt ist, der dem halben möglichen Gesamtvorschub des jeweiligen Formwerkzeuges 3 bzw. 4 entspricht. Mit der Welle 10 ist drehfest ein Zahnrad 11 verbunden, das mit einem Zahnkranz 12 am oberen Ende einer sich über Kugellager 13,14 auf der Antriebswelle 1 abstützenden Hülse 15 kämmt. Auf der Antriebswelle 1 und der Hülse 15 ist drehfest jeweils eine Zahnriemenscheibe 16 bzw. 17 angeordnet, die über einen Zahnriemen 18 bzw. 19 mit jeweils einer Zahnriemenscheibe 20 bzw. 21 in Verbindung steht, von denen eine jede durch eine Welle 22 bzw. 23 in eine Drehbewegung versetzbar ist. Die Wellen 22,23 sind mittels Kugellagern 24,25 in Exzenterbuchsen gelagert, um die Spannung des jeweiligen Zahnriemens 18 bzw. 19 einstellen zu können, indem man die mit einer exzentrischen Bohrung 26 versehene Exzenterbuchse 27 um einen bestimmten Winkelbetrag in der für sie vorgesehenen Aufnahme 28 schwenkt.

Die Antriebswelle 1 umschließt eine weitere Hohlwelle 29, auf der sie sich über Lager 30,31 abstützt. Die weitere Hohlwelle 29, die mit einer Drehzahl angetrieben werden kann, die gleich der Drehzahl des Glasrohres 32 ist, trägt an ihrem oberen Ende einen Dorn 33, der bei der Formgebung des unteren Endes des Glasrohres 32 in dieses eindringt und eine Stützfunktion ausübt.

Die über den Zahnriemen 19 antreibbare Hülse 15 stützt sich über Kugellager 34,35 an einem Schlitten 36 ab, der an einem Ständer 37 geführt ist und dessen Höhe gegenüber der Grundplatte 38 des Ständers 37 durch eine Einstellvorrichtung mit einer Gewindespindel 39 verändert werden kann.

Aufgrund des bisher beschriebenen Aufbaues der Vorrichtung ist es möglich, die Antriebswelle 1 und die Hülse 15 mit gleicher Drehzahl anzutreiben. In diesem Falle findet zwischen den Zahnrädern 11 auf den Wellen 10 und dem Zahnkranz 12 keine Relativbewegung statt. Zu einer Relativbewegung kommt es dann, wenn Antriebswelle 1 und Hülse 15 mit unterschiedlichen Drehzahlen rotieren, wobei der Drehzahlunterschied zur Verwirklichung eines Vorschubes der Formwerkzeuge 3,4 zur Längsachse 40 des Glasrohres 32 hin pro Umdrehung des Drehtellers 2 außerordentlich klein sein kann. In der Praxis läßt sich die Drehzahldifferenz bei einem Antrieb beider Wellen 22,23 von einem gemeinsamen Motor auf mechanischem Wege durch eine Bewegungsüberlagerung auf ein schwenkbares Zwischenrad realisieren, während bei Verwendung getrennter Antriebsmotoren das gleiche Ergebnis durch eine elektronische Regelung der Motoren erreicht werden kann.

Wichtig ist, daß der Drehteller 2 mit einer weit höheren Drehzahl rotiert als das in bekannter Weise in ein Klemmfutter eingespannte Glasrohr und daß auf diese Weise eine gewissermaßen "sanfte" Verformung des Glasrohres zum Hals eines Fläschchens stattfinden kann, indem man den Vorschub der Formwerkzeuge pro Umdrehung klein hält. Die Gefahr schädlicher Torsionsbeanspruchungen des Glasrohres während der Verformung ist eliminiert und es lassen sich mit großer Schnelligkeit und hoher Genauigkeit Verformungsprozesse an Glasrohren durchführen. Die beim Einsatz bekannter Vorrichtungen regelmäßig nicht vermeidbare Aufteilung des Verformungsprozesses in mehreren Stationen einer Glasbearbeitungsmaschine zugeordnete Abschnitte kann regelmäßig entfallen, d.h. vorhandene Stationen können für andere Zwecke genutzt werden.

## Patentansprüche

1. Vorrichtung zum Verformen von Glasrohren (32) mit mindestens einem in eine Drehbewegung versetzbaren Formwerkzeug (3, 4), das gegen den Umfang des erweichten Glasrohres drückbar ist, um eine seinem Profil entsprechende Einschnürung des Glasrohres zu erzeugen, **dadurch gekennzeichnet,** daß sie einen während des Formgebungsprozesses um die Längsachse (40) des Glasrohrs (32) rotierenden Drehteller (2) aufweist, auf dem drehbar und senkrecht zur Längsachse (40) des Glasrohrs (32) verschiebbar das Formwerkzeug (3, 4) gelagert ist.

2. Vorrichtung nach Anspruch 1, **dadurch gekennzeichnet,** daß das Formwerkzeug (3,4) drehbar auf einem zylindrischen Zapfen (7) gelagert ist, dessen Längsachse (8) gegenüber der Längsachse (9) einer ihn tragenden Welle (10) um einen Betrag versetzt ist, der dem halben möglichen Gesamtvorschub des Formwerkzeuges (3,4) entspricht.

3. Vorrichtung nach Anspruch 2, **dadurch gekennzeichnet,** daß auf der den Zapfen (7) tragenden Welle (1) ein Zahnrad (11) zur Einleitung einer Drehbewegung in die Welle (10) sitzt.

4. Vorrichtung nach Anspruch 3, **dadurch gekennzeichnet,** daß das auf der den Zapfen (7) tragenden Welle (1) sitzende Zahnrad (11) mit einem Zahnkranz (12) kämmt, der die Antriebswelle (1) für den Drehteller (2) umschließt.

5. Vorrichtung nach Anspruch 4, **dadurch gekennzeichnet,** daß in die Antriebswelle (1) für den Drehteller (2) und den Zahnkranz (12) Drehbewegungen einleitbar sind, deren Drehzahlen während der Vorschub- und Rückzugsphasen des Formwerkzeuges (3,4) geringfügig voneinander differieren, ansonsten aber gleich sind.

6. Vorrichtung nach Anspruch 4 oder 5, **dadurch gekennzeichnet,** daß der Zahnkranz (12) von einem Teil einer Hülse (15) gebildet wird, die drehbar auf der als Hohlwelle ausgebildeten Antriebswelle (1) für den Drehteller (2) gelagert ist.

7. Vorrichtung nach einem oder mehreren der Ansprüche 1 bis 6, **dadurch gekennzeichnet,** daß im Zentrum des Drehtellers (2) ein in das offene Ende des Glasrohres (32) einführbarer Dorn (33) angeordnet ist.

8. Vorrichtung nach einem oder mehreren der Ansprüche 1 bis 7, **dadurch gekennzeichnet,** daß auf dem Drehteller (2) zwei sich diametral gegenüberliegende, von Profilrollen gebildete Formwerkzeuge (3,4) gelagert sind.

## Claims

1. A device for the shaping of glass tubes (32), with at least one shaping tool (3,4) which can be set in rotational movement and which can be pressed against the circumference of the softened glass tube, in order to produce a contraction of the glass tube, said contraction corresponding to the profile of said shaping tool, wherein there is a turntable (2) which rotates about the longitudinal axis (40) of the glass tube (32) during the shaping process and on which the shaping tool (3, 4) is mounted rotatably and so as to be displaceable perpendicularly to the longitudinal axis (40) of the glass tube (32).

2. The device as claimed in claim 1, wherein the shaping tool (3, 4) is mounted rotatably on a cylindrical journal (7), the longitudinal axis (8) of which is offset, relative to the longitudinal axis (9) of a shaft (10) carrying it, by an amount which corresponds to half the possible total advance of the shaping tool (3, 4).

3. The device as claimed in claim 2, wherein a gearwheel (11) for imparting a rotational movement to the shaft (10) is seated on the shaft (1) carrying the journal (7).

4. The device as claimed in claim 3, wherein the gearwheel (11) seated on the shaft (1) carrying the journal (7) meshes with a toothed ring (12) which surrounds the drive shaft (1) for the turntable (2).

5. The device as claimed in claim 4, wherein rotational movements can be imparted to the drive shaft (1) for the turntable (2) and the toothed ring (12), the rotational speeds of said rotational movements differing slightly from one another during the phases of advance and retraction of the shaping tool (3, 4), but otherwise being equal.

6. The device as claimed in claim 4 or 5, wherein the toothed ring (12) is formed by part of a sleeve (15) which is mounted rotatably on the drive shaft (1), designed as a hollow shaft, for the turntable (2).

7. The device as claimed in one or more of claims 1 to 6, wherein a mandrel (33) capable of being introduced into the open end of the glass tube (32) is arranged in the center of the turntable (2).

8. The device as claimed in one or more of claims 1 to 7, wherein two diametrically opposed shaping tools (3, 4) formed by profile rollers are mounted on the turntable (2).

## Revendications

1. Dispositif pour façonner des tubes de verre (32), comprenant au moins un outil de formage (3, 4) pouvant être mis en mouvement de rotation, qui peut être pressé contre la périphérie du tube de verre ramolli, pour produire un étranglement du tube de verre qui correspond à son profil, caractérisé en ce qu'il présente un plateau tournant (2), qui tourne autour de l'axe longitudinal (40) du tube de verre (32) pendant l'opération de formage, et sur lequel l'outil de formage (3, 4) est monté mobile en rotation et mobile en translation perpendiculairement à l'axe longitudinal (40) du tube de verre (32).

2. Dispositif selon la revendication 1, caractérisé en ce que l'outil de formage (3, 4) est monté mobile en rotation sur un tourillon cylindrique (7) dont l'axe longitudinal (8) est déporté par rapport à l'axe longitudinal (9) d'un arbre (10), qui le porte d'une distance qui correspond à la moitié de l'avance totale possible de l'outil de formage (3, 4).

3. Dispositif selon la revendication 2, caractérisé en ce que, sur l'arbre (1) qui porte le tourillon (7), est montée une roue dentée (11) servant à transmettre un mouvement de rotation à l'arbre (10).

4. Dispositif selon la revendication 3, caractérisé en ce que la roue dentée (11) montée sur l'arbre (1) qui porte le tourillon (7) engrène avec une couronne dentée (12) qui entoure l'arbre d'entraînement (1) du plateau tournant (2).

5. Dispositif selon la revendication 4, caractérisé en ce qu'on peut transmettre à l'arbre d'entraînement (1) qui porte le plateau tournant (2) et à la couronne dentée (12), des mouvements de rotation dont les vitesses de rotation différent légèrement l'une de l'autre pendant les phases d'avance et de retrait de l'outil de formage (3, 4) mais qui sont identiques dans les autres cas.

6. Dispositif selon la revendication 4 ou 5, caractérisé en ce que la couronne dentée (12) est formée par une partie d'une douille (15) qui est montée rotative sur l'arbre d'entraînement (1) du plateau tournant (2), qui est constitué par un arbre creux.

7. Dispositif selon une ou plusieurs des revendications 1 à 6, caractérisé en ce qu'au centre du plateau tournant (2) est agencé un mandrin (3) qu'on peut engager dans l'extrémité ouverte du tube de verre (32).

8. Dispositif selon une ou plusieurs des revendications 1 à 7, caractérisé en ce que, sur le plateau tournant (2), sont montés deux outils de formage (3, 4) diamétralement opposés, qui sont constitués par des molettes de profil.
